# EUROPÄISCHE PATENTSCHRIFT

(11) **EP 1 737 753 B1**
(45) Veröffentlichungstag und Bekanntmachung des Hinweises auf die Patenterteilung: **30.04.2008**
(21) Anmeldenummer: 05714193.9
(22) Anmeldetag: 31.03.2005
(51) Int. Cl.: B65D 77/20, B29C 65/08, B29C 65/02

(54) **DECKEL MIT ENTNAHMEÖFFNUNG ZUM VERSCHLIESSEN VON BEHÄLTERN**
LID PROVIDED WITH EXTRACTING OPENINGS FOR CLOSING A CONTAINER
COUVERCLE AVEC OUVERTURE DE DISTRIBUTION, DESTINE A LA FERMETURE DE RECIPIENTS

(30) Priorität: 15.04.2004 AT 6512004
(43) Veröffentlichungstag der Anmeldung: 03.01.2007
(73) Patentinhaber: TEICH AKTIENGESELLSCHAFT, 3200 Weinburg (AT)
(72) Erfinder: SCHEDL, Adolf, 3200 Ober-Grafendorf (AT); NIEDERER, Andreas, 3390 Melk (AT); NEKULA, Lambert, 3202 Hofstetten (AT); KORNFELD, Martin, 3400 Klosterneuburg (AT); KITZBERGER, Robert, 3100 St. Pölten (AT)
(74) Vertreter: Dungler, Karin
(86) Internationale Anmeldenummer: PCT/AT2005/000112
(87) Internationale Veröffentlichungsnummer: WO 2005/100197

(56) Entgegenhaltungen:
- EP-A- 1 162 156
- EP-A- 1 164 093
- EP-A- 1 285 859
- EP-A- 1 288 136
- WO-A-01/26987
- WO-A-97/02997
- DE-A1- 10 204 968
- DE-A1- 10 235 687
- DE-U1-4202004 010 21
- US-A- 5 316 603
- US-A- 6 056 141
- US-A1- 2004 013 827

## Beschreibung

Die Erfindung betrifft ein Verfahren zur Herstellung eines Deckels mit Öffnungshilfe zum Verschließen von Behältern auf Basis eines zumindest zweilagigen Verbundes aus in ihrem Aufbau durchgehenden Verbundlagen, wobei die dem Behälter zugewandte Verbundlage gegen den Behälterrand siegelt, sodass sich beim Trennen der Verbundlagen eine Öffnung für die Entnahme des im Behälter befindlichen Packungsgutes bildet und wobei die dem Behälter zugewandte Verbundlage vorwiegend aus einem Kunststoff besteht, dessen innere Reißfestigkeit im Bereich der Entnahmeöffnung, ohne dass Schwächungslinien für die Entnahmeöffnung vorgesehen sind, niedriger als seine Verbundhaftung zu der dem Behälter abgewandten Verbundlage im verbleibenden Deckelbereich und dessen Verbundhaftung zum Behälterrand zumindest im Bereich der Öffnungshilfe größer als jene zu der dem Behälter abgewandten Verbundlage ist.

Es ist bekannt, zumindest zweilagige Deckel zum Verschließen von Behältern einzusetzen, um beispielsweise den für Lebensmittel geforderten Aromaschutz zu ermöglichen.

Weiters hat es sich gezeigt, dass insbesondere im Fall von verderblichen Lebensmitteln beim Konsumenten erhöhter Informationsbedarf betreffend Herkunft, Inhaltsstoffe, sowie Haltbarkeit besteht. Um für diese Informationen ausreichend Raum zu schaffen, ist man dazu übergegangen, diese auf der äußeren Lage des zweilagigen Deckels aufzudrucken, wogegen die innere Lage soweit als möglich unbedruckt bleibt. Dies auch deshalb, da ein möglicher Kontakt von Druckfarben mit den Lebensmitteln vermieden werden soll.

Die vorgenannten zweilagigen Deckel weisen auch dann einen erhöhten Aromaschutz auf, wenn in der dem Packungsgut zugewandten Lage des Deckels eine Entnahmeöffnung vorgesehen ist. Dies erfolgt vorzugsweise durch Maßgabe von Schwächungslinien, welche beim Öffnen der Packung, d.h. beim Trennen der Deckellagen voneinander, freigelegt werden, siehe EP-A-1 164 093. Durch Eindrücken dieser Schwächungslinien entsteht eine Entnahmeöffnung, über welche Packungsgut ganz oder teilweise entnommen werden kann. Insbesondere bei Großpackungen ist es vorteilhaft, wenn die äußere Deckellage beispielsweise mit einem drucksensitiven Kleber an ihrer Innenseite versehen ist, um die Entnahmeöffnung wieder verschließen zu können.

Dennoch weisen diese Packungslösungen den Nachteil auf, dass durch die Schwächungslinien in der Deckellage, welche dem Packungsgut zugewandt ist, eine mögliche Fehlerstelle vorgegeben ist. Dies insbesondere dann, wenn die äußere Lage des Deckels beispielsweise beim Transport beschädigt wird, und so über die Schwächungslinien Feuchtigkeit oder ggf. Verunreinigungen in Form von Bakterien in das Packungsgut eindringen können. Weiters zeigen insbesondere Aluminiumfolien im Bereich der Schwächungslinien die Eigenschaft einer unerwünschten Korrosion.

Aufgabe der vorliegenden Erfindung ist es demgemäß, die aus dem Stand der Technik bekannten Nachteile für zumindest zweilagige Deckel zum Verschließen von Behältern zu vermeiden, wobei jedoch gleichzeitig an diesen Deckeln eine Entnahmeöffnung bereitgestellt werden soll, auf welche der Konsument in einfacher Weise, vorzugsweise beim Öffnen der Packung, zugreifen kann.

Erfindungsgemäß wird diese Aufgabe mit einem Verfahren der eingangs genannten Art gelöst, welches dadurch gekennzeichnet ist, dass die Verbundlagen für die Deckel in einem der Entnahmeöffnung entsprechenden Bereich mittels Siegelwerkzeugen einem erhöhten Druck und erhöhter Temperatur ausgesetzt werden, sodass sich in diesem vorgegebenen Bereich die Verbundhaftung zwischen den Verbundlagen im Vergleich zum verbleibenden Deckelquerschnitt erhöht.

Damit wird der Effekt erzielt, dass der Kunststoff, welcher in der dem Behälter zugewandten Verbundlage vorliegt, an der äußeren Verbundlage im Bereich der Entnahmeöffnung so stark haftet, dass beim Öffnen ein Bereich entsprechend der Entnahmeöffnung herausgerissen wird, wobei die verbleibende Lage des Deckels, welche dem Behälter zugewandt ist, über die siegelnde Wirkung zum Behälterrand an diesem haften bleibt. Damit der Konsument in einfacher Weise auf das Packungsgut über die Entnahmeöffnung zugreifen kann, fasst dieser den Deckel an seiner Öffnungshilfe und "peelt" die vom Behälter abgewandten Lage von der darunter liegenden Kunststofflage. Durch die angewandte Kraft bricht die Kunststofflage vom Behälterrand zumindest im Bereich der Öffnungshilfe, sodass der Behälter partiell - mit Ausnahme der Entnahmeöffnung - verschlossen bleibt.

Weiters wird im ungeöffneten Zustand die Gefahr eines möglichen Eindringens von Verunreinigungen vermieden, da die Materiallagen in sich durchgehend sind, d.h. keinerlei Schwächungslinien für die Ausbildung der möglichen Entnahmeöffnung vorgesehen sind.

Die Erfindung wird im Folgenden anhand der Figuren 1 bis 6 sowie anhand möglicher Ausführungsformen der Erfindung näher erläutert. Dabei zeigt Fig. 1 mögliche Ausführungsformen des erfindungsgemäß hergestellten Deckels, wobei Figuren 2 bis 4 mögliche Varianten des erfindungsgemäßen Verfahrens, insbesondere zur Herstellung des Bereiches erhöhter Verbundhaftung innerhalb des Deckels darstellen. Weiters zeigen Fig. 5 und 6 die Verwendung des erfindungsgemäß hergestellten Deckels zum Verschließen eines Behälters.

Zur Herstellung des Deckels 1 werden als Verbundlage 2, d.h. als der dem Behälter zugewandten Verbundlage des Deckels, vorwiegend Kunststoffe, entweder in Form von Mono- oder Mehrlagenschichten eingesetzt. Die Verbundlage 2 aus Kunststoff besitzt beispielsweise eine Dicke in einem Bereich von 6 bis 100µm. Die eingesetzten Kunststoffe werden vorwiegend aus der Gruppe der Polystyrole, Polyethylene, Polyester, sowie Polypropylene, sowie der entsprechenden Copolymere, sowie ihren Mischungen bereitgestellt. Die Kunststoffe selbst können gefüllt oder ungefüllt sein, wobei als Füllstoffe vorteilhafterweise Talkum, Kieselsäure oder Kreide eingesetzt werden.

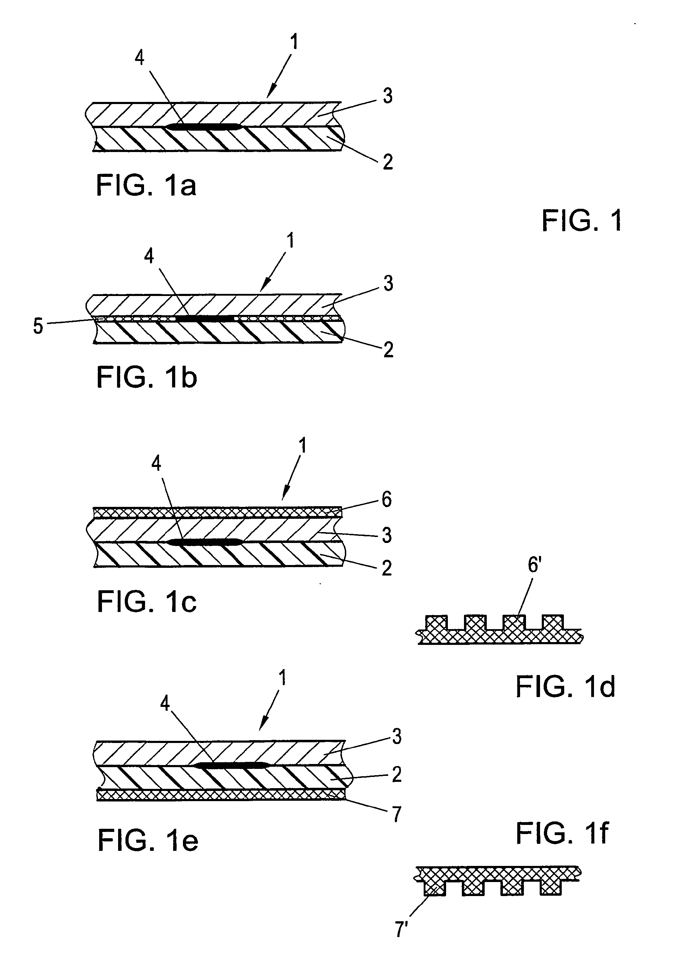

Vorteilhafterweise wird für die dem Behälter zugewandte Kunststofflage 2 eine Kunststofflage eingesetzt, welche gegen den Behälterrand 17' siegelt. Aufgrund dessen könnte auf ein zusätzliches Siegelmedium, beispielsweise in Form eines Siegellackes, wie in Fig. 1e dargestellt, verzichtet werden.

Weiters kann die dem Behälter zugewandte Verbundlage 2 an ihrer äußeren, das heißt beim "Peelen" dem Konsumenten zugewandten Seite, mit einem gegebenenfalls informativen Aufdruck versehen werden.

Die dem Behälter abgewandte Verbundlage 3 besteht beispielsweise aus einer Aluminiumfolie mit einer Dicke von 10 bis 100µm. Es ist jedoch auch denkbar, eine Kunststofffolie mit erhöhter Festigkeit einzusetzen und diese ggf. mit Aluminium oder Papier an ihrer Außenseite zu kombinieren.

Nach Auswahl der Materialien für die Lagen 2 und 3 wird der peelfähige Verbund für den Deckel 1 hergestellt. Dies erfolgt beispielsweise durch Coextrusion, was besondere Vorteile beim Einsatz von Kunststoffen sowohl in der Lage 2 als auch in der Lage 3 zeigt. Weiters ist es möglich, die Lage 2 durch Extrusionsbeschichten auf die Lage 3 aufzubringen. Dies erfolgt insoferne, als der Kunststoff der Lage 2 auf die Lage 3 aufextrudiert und mit dieser anschließend derart verbunden wird, dass die Peelfähigkeit der Lagen 2 und 3 erhalten bleibt.

Weiters ist es denkbar, den Verbund aus den Lagen 2 und 3 durch Kaschieren herzustellen. Dies kann je nach Art des Kunststoffes und/oder dessen Anteils an Copolymeren mit oder ohne Zusatz von Haftvermittlern erfolgen.

Nach Herstellen des peelfähigen Verbundes für den Deckel 1 wird dieser bedruckt und - falls erforderlich - mit einem Siegelmedium versehen. Dabei wird - siehe Fig. 1e - ein üblicher Siegellack 7 an der dem Behälter zugewandten Seite der Kunststofflage 2 aufgebracht, welcher oberflächenrau ausgestaltet werden kann, um das Entstapeln der üblicherweise in Magazinen übereinander gelagerten Deckel zu erleichtern. Dabei kann eine oberflächenraue Ausgestaltung in Form von oberflächenrauen geometrisch angeordneten Abstandhalter 7'(siehe Fig. 1f) gewählt werden.

Weiters kann auch der Drucklack 6 auf der äußeren Verbundlage 3 - siehe Fig. 1c und 1d - oberflächenrau sein, um zusätzlich die Entstapelung zu erleichtern und ggf. ein besonderes Druckdekor zu erzielen. Dabei wird der Drucklack 6 in Form geometrisch angeordneter Abstandshalter 6' (sh. dazu Fig. 1d) angebracht. Um den Bereich 4, in welchem die Verbundhaftung zwischen den Lagen 2 und 3 erhöht im Vergleich zum verbleibenden Deckelbereich ist, genauer zu kennzeichnen, kann dieser ebenso ein in seiner Oberflächenausgestaltung glattes, informatives Druckbild aufweisen, um den Konsumenten die Möglichkeit einer partiellen Entnahme über die durch die in der Folge im Bereich 4 entstehenden Entnahmeöffnung anzuzeigen.

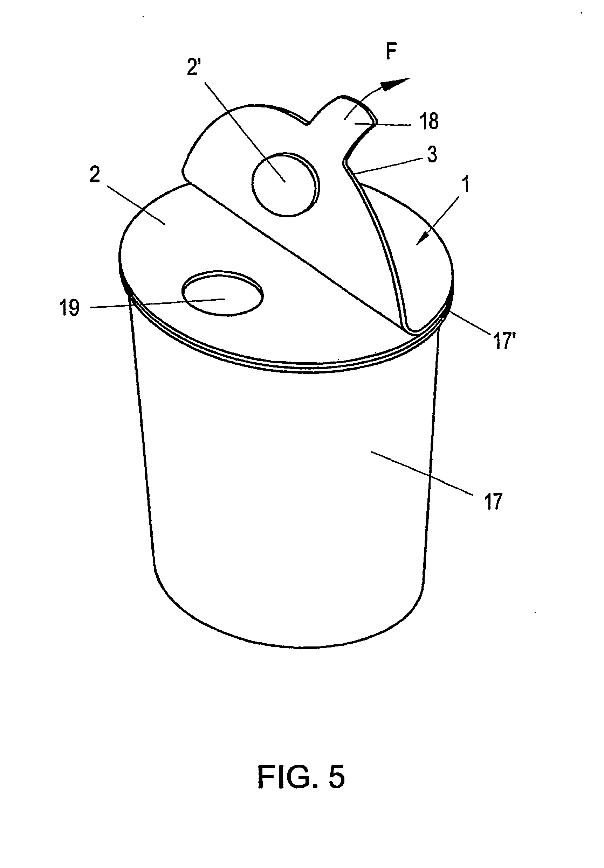

Um nun den Bereich 4 mit erhöhter Verbundhaftung zwischen den Lagen 2 und 3, welcher auch in der Folge der Form der Entnahmeöffnung 19 wie in Fig. 5 gezeigt entspricht, bereitstellen zu können, stehen folgende Varianten für die Durchführung des erfindungsgemäßen Verfahren zur Verfügung: Gemäß Figurendarstellungen 2 und 3 erfolgt die Herstellung des Bereiches mit erhöhter Verbundhaftung 4 nach einem sogenannten Walzenprinzip. Dabei sind die Walzen 8 bzw. 10 an ihrer Oberfläche mit Erhebungen 8' bzw. 10' ausgestattet. Die Walzen selbst sind auf eine Temperatur zwischen 100 und 300°C erwärmt.

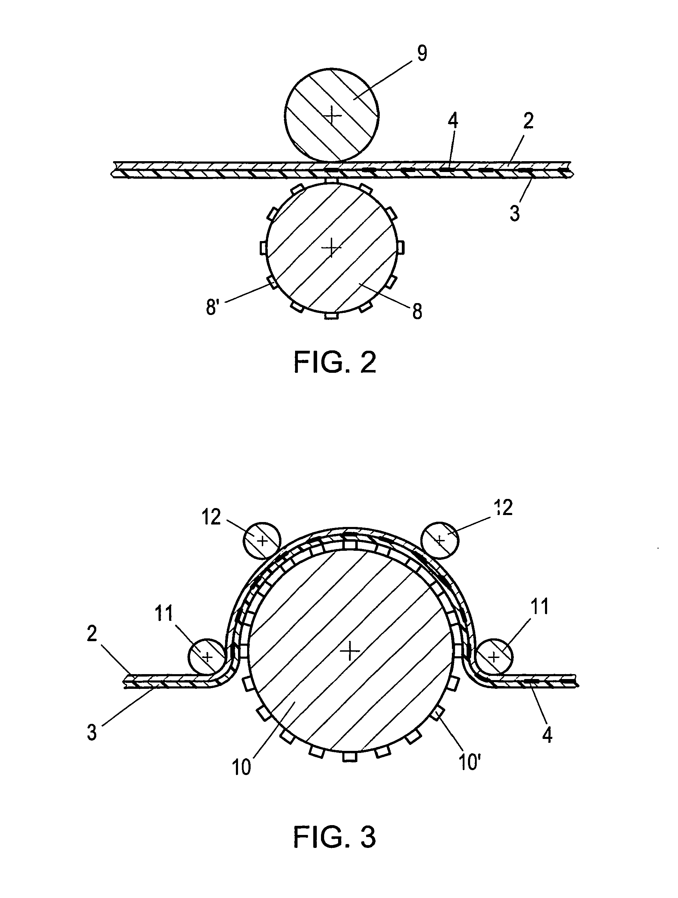

Gemäß Fig. 2 wird der Verbund bestehend aus den Lagen 2 und 3 zwischen den Walzen 9 und 8 durchgeführt. Durch den Anpressdruck der Walzen im Walzenspalt und durch Maßgabe der Erhöhungen 8' entsteht ein Bereich 4 mit erhöhter Verbundhaftung, wie dies beispielsweise in Fig. 1a schematisch skizziert ist.

Zur Erhöhung der Verweilzeiten ist gemäß Fig. 3 eine beheizte Trommel 10 vorgesehen, an welcher über Umlenkwalzen 11 die Verbundlagen 2 und 3 an ihrer Oberfläche herangeführt werden. Durch Form und Größe der Trommel und der daran vorgesehenen Erhebungen 10' können die Verweilzeiten im Vergleich zu der Verfahrensführung nach Fig. 2 wesentlich erhöht werden. Durch Maßgabe der Anpresswalzen 2 sind die Verbundlagen 2, 3 über einen weiten Bereich dem Druck der Trommelwalze, insbesondere der Erhöhungen 10' ausgesetzt, sodass im Bereich 4 eine besonders starke Verbundhaftung, d.h. nahezu eine Verschweißung der Verbundlagen 2 und 3 erzielt werden kann.

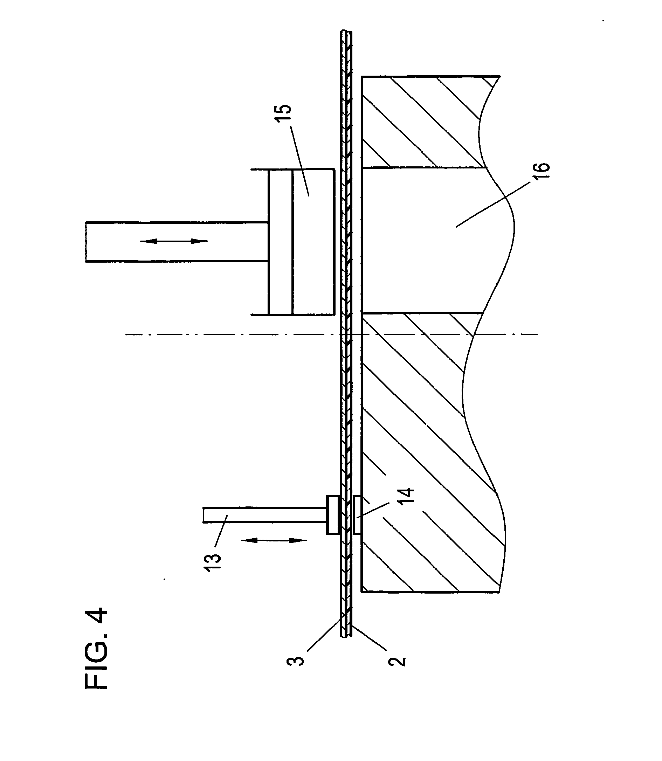

Gemäß Fig. 4 wird gezeigt, dass die Herstellung des Bereiches erhöhter Verbundhaftung ebenso kontinuierlich beim Ausstanzen des als Rolle vorliegenden Materials in die einzelnen Deckel durchgeführt werden kann. Dabei werden die Verbundlagen 2, 3 als Rollenware zwischen einem Stanzwerkzeug 13 und einer beheizten Platte 14 durchgeführt, das Stanzwerkzeug auf die Lage 3 gesenkt, wobei gleichzeitig durch Maßgabe der beheizten Platte 14 über die Lage 3 ein Verschweißen der beiden Lagen 2 und 3 erfolgt. Dadurch kann eine erhöhte Verbundhaftung wie im Bereich 4 vorgesehen, erzielt werden und unmittelbar danach mit Hilfe eines üblichen Stanzwerkzeuges 15 die noch in Rollenwaren vorliegenden Verbunde, wie beispielsweise in Fig. 1a gezeigt, in die einzelnen Deckel gestanzt werden, welche über die Auslassöffnung 16 entnommen werden können.

Bestehen die Verbundlagen 2 und 3 jedoch aus thermoplastischen Kunststoffen, so können diese in einem vorgegebenen Bereich, vorzugsweise dem auszubildenden Bereich erhöhter Verbundhaftung 4, zum plastischen Fließen erhitzt und unter Druck zusammengepresst werden. Dies erfolgt beispielsweise durch Ultraschall- oder Induktionsschweißen.

Weiters ist es möglich, durch übliche Kaschierverfahren zwischen den Lagen 2 und 3 einen Haftvermittler aufzubringen, welchem latente Vernetzungsbeschleuniger zugesetzt werden. Werden auf diesen Verbund in vorgegebenen Bereichen erhöhter Druck sowie erhöhte Temperatur einwirken gelassen, so bewirkt dies das Auslösen einer Vernetzungsreaktion, sodass in diesem vorgegebenen Bereich 4 eine im Vergleich zum verbleibenden Deckelquerschnitt erhöhte Verbundhaftung erzielt wird.

Die im Bereich 4 erhöhte Verbundhaftung wird nunmehr anhand der durchschnittlichen Schälkraft, welche zum Trennen der Verbundlagen 2 und 3 erforderlich ist, gemessen. Dabei wird ein Probestück aus den Verbundlagen 2 und 3 hergestellt, welches in Laufrichtung 15mm breit und in Längsrichtung ca. 300mm lang ist. Anschließend werden die Verbundlagen 2 und 3 an ihren Enden von Hand voneinander getrennt und in die Klemmeinrichtung eines Zugprüfgerätes, beispielsweise eines der Firma Zwick, eingespannt. Bei einer Abzugsgeschwindigkeit von 100mm/min, einer Einspannlänge von max. 50mm und einem Abzugswinkel von 90° erfolgt die weitere Prüfung. Das Messergebnis bzw. der Verlauf der Schälfestigkeit entspricht einer Verbundhaftungsmessung und wird entweder am Zugprüfgerät selbst oder mit einem Diagrammschreiber aufgezeichnet. Aus den Messergebnissen der Versuchsreihe werden Mittelwerte in N/15mm errechnet. Dabei zeigt sich, dass im Bereich der erhöhten Verbundhaftung 4 Messwerte von > 5 N/15mm bis maximal 160 N/15mm erzielt werden, d.h. die Verbundhaftung im Bereich 4 ist derart hoch, dass beim Öffnen, wie in Fig. 5 gezeigt, ein Teil der Verbundlage 2 "herausgerissen" wird und aufgrund der erhöhten Verbundhaftung als Teilbereich 2' an der Lage 3 haften bleibt. Im verbleibenden Behälterquerschnitt hingegen liegt eine Verbundhaftung von 0.1 bis 5N/15mm vor, wobei eine für den Konsumenten "angenehme Peelkraft" durch eine Verbundhaftung im Bereich von 0.2 bis 0.4 N/15mm gegeben ist. Diese Verbundhaftung ist auch niedriger als jene zwischen der Lage 2 und dem Behälterrand 17', sodass die Lagen 2 und 3 im verbleibenden Deckelbereich in einfacher Weise voneinander getrennt (gepeelt) werden können. Dieser Vorgang wird anhand von Fig. 5 erläutert:

Dabei wird die Öffnungshilfe 18 in Form einer Grifflasche in Richtung des Pfeiles F angezogen, sodass durch die aufgewandte Kraft die Lagen 2 und 3 voneinander getrennt (gepeelt) werden. Durch die erhöhte Verbundhaftung im Bereich 4 (sh. dazu Fig. 1a) wird nunmehr entsprechend der Dimension der Entnahmeöffnung 19 die Lage 2' aus der Kunststofflage 2 derart herausgerissen, dass diese aufgrund der erhöhten Verbundhaftung an der Lage 3, d.h. an der dem Behälter abgewandten Verbundlage, haften bleibt. Durch die angewandte Kraft bricht weiters die Kunststofflage 2 vom Behälterrand 17' zumindest im Bereich der Öffnungshilfe 18, so dass der Behälter partiell - mit Ausnahme der Entnahmeöffnung - verschlossen bleibt. Durch die Siegelnahtfestigkeit zwischen dem Behälterrand 17' und der Lage 2 bleibt der Behälter 17 somit großteils verschlossen, wobei über die Entnahmeöffnung 19 das Packungsgut, wie Trinkjoghurt aber auch Gewürze, entnommen werden kann.

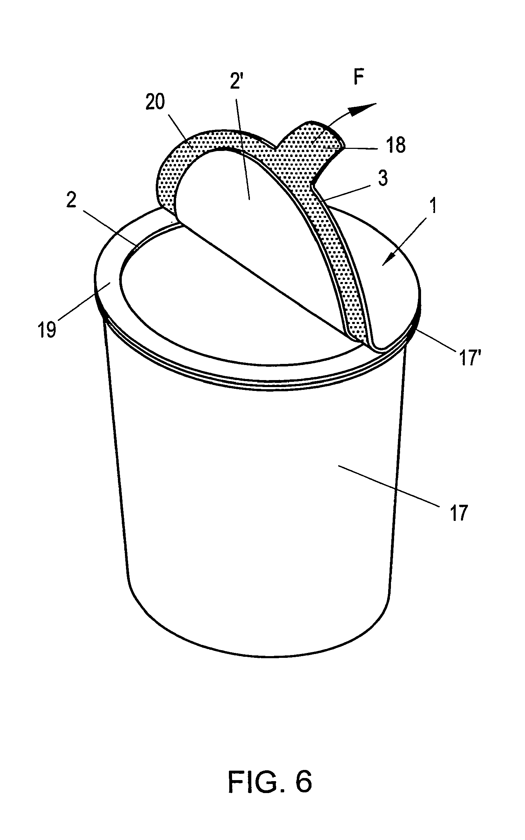

Soll jedoch das Packungsgut nur teilweise entnommen und der Behälter anschließend zumindest lose wiederverschlossen werden, so kann die dem Behälter abgewandte Verbundlage 3 mit einem drucksensitiven Kleber 20 versehen werden. Wie in Fig. 6 gezeigt, wird der Behälter 17 durch Abziehen des Deckels 1 in Richtung des Pfeiles F geöffnet, sodass das Packungsgut partiell entnommen werden kann. Anschließend wird die Lage 3 in Gegenrichtung zum Pfeil F wieder über die nach dem Öffnen verbleibende Verbundlage 2 gelegt und an diese zumindest leicht angedrückt, sodass sich die Klebewirkung des drucksensitiven Klebers 20 entfalten kann. Der drucksensitive Kleber 20 kann auch im Bereich der Grifflasche 18 vorliegen, sodass durch deren Umstülpen über den Behälterrand 17' das Fixieren der Grifflasche erfolgt, wodurch die Wiederverschließbarkeit des Behälters 17 insgesamt verbessert wird.

Zusammenfassend kann ein Ausführungsbeispiel der Erfindung wie folgt dargestellt werden:

Es wird erfindungsgemäß ein Verfahren zur Herstellung eines Deckels 1, welcher im wesentlichen aus den Verbundlagen 2 und 3 besteht, beschrieben, wobei die dem Behälter zugewandte Verbundlage 2 durchgehend, d.h. ohne etwaige Schwächungslinien, aus einem Kunststoff besteht, dessen innere Reißfestigkeit im Bereich einer möglichen Entnahmeöffnung niedriger ist als dessen Haftung an der äußeren Verbundlage 3, d.h. an der dem Behälter abgewandten Lage. Dies führt dazu, dass beim Abschälen der Lage 3 von der darunter liegenden Lage 2 mit der Öffnungshilfe 18 ein der Entnahmeöffnung 19 entsprechender Teil 2' dieser Lage herausgerissen wird, wogegen die restliche Verbundlage am Behälterrand 17' haften bleibt. Durch die angewandte Kraft beim Abschälen (Peelen) bricht weiters die Kunststofflage 2 vom Behälterrand 17' zumindest im Bereich der Öffnungshilfe 18, so dass der Behälter partiell - mit Ausnahme der Entnahmeöffnung - verschlossen bleibt. Dieser Effekt wird durch gezieltes Einstellen der Verbundhaftung einerseits zwischen den Lagen 2, 3 des Deckelelements und anderseits zwischen dem Behälterrand 17' und der dem Behälter zugewandten Lage 2 erzielt. So ist die Verbundhaftung im Bereich der potentiellen Entnahmeöffnung 4, 19 erhöht im Vergleich zu der zwischen den Lagen 2 und 3 vorliegenden Verbundhaftung. Sie ist jedoch zumindest gleich hoch wie jene Verbundhaftung zwischen der dem Behälter zugewandten Lage 2, d.h. jene Verbundhaftung, welche die Siegelnahtfestigkeit zwischen der inneren Deckellage 2 und dem Behälterrand 17' bewirkt. Dies bedeutet, dass beim Trennen der Lagen 2, 3 voneinander zwar eine Entnahmeöffnung 19 gebildet, jedoch die innere Lage 2 weiterhin Großteils am Behälterrand 17' haften bleibt. Dies ermöglicht es, dass auch partiell Packungsgut entnommen werden kann und nach dessen Entnahme der Behälter zumindest teilweise wieder verschließbar ist.

## Patentansprüche

1. Verfahren zur Herstellung eines Deckels (1) mit Öffnungshilfe (18) zum Verschließen von Behältern (17) auf Basis eines zumindest zweilagigen Verbundes aus in ihrem Aufbau durchgehenden Verbundlagen, wobei die dem Behälter zugewandte Verbundlage (2) gegen den Behälterrand (17') siegelt, sodass sich beim Trennen der Verbundlagen (2, 3) eine Öffnung (19) für die Entnahme des im Behälter befindlichen Packungsgutes bildet und wobei die Verbundlage (2) vorwiegend aus einem Kunststoff besteht, dessen innere Reissfestigkeit im Bereich der Entnahmeöffnung (4, 19), ohne dass Schwächungslinien für die Entnahmeöffnung vorgesehen sind, niedriger als seine Verbundhaftung zu der dem Behälter abgewandten Verbundlage (3) im verbleibenden Deckelbereich und dessen Verbundhaftung zum Behälterrand (17') zumindest im Bereich der Öffnungshilfe (18) größer als jene zur Verbundlage (3) ist, **dadurch gekennzeichnet, dass** die Verbundlagen (2,3) in einem der Entnahmeöffnung entsprechenden Bereich (4) mittels Siegelwerkzeugen einem erhöhten Druck und erhöhter Temperatur ausgesetzt werden, sodass sich in diesem Bereich (4) die Verbundhaftung zwischen den Verbundlagen (2,3) im Vergleich zum verbleibenden Deckelquerschnitt erhöht.

2. Verfahren nach Anspruch 1, **dadurch gekennzeichnet, dass** als Siegelwerkzeuge Walzen (8, 10) mit Oberflächenerhebungen (8', 10') eingesetzt werden, wobei die Oberflächenerhebungen dem Bereich erhöhter Verbundhaftung (4) entsprechen.

3. Verfahren nach Anspruch 1 oder 2, **dadurch gekennzeichnet, dass** außerhalb der Entnahmeöffnung (4, 19) eine Verbundhaftung in einem Bereich von 0.1 bis 5 N/15mm, vorzugsweise 0.2 bis 0.4 N/15mm vorliegt.

4. Verfahren nach einem der Ansprüche 1 bis 3, **dadurch gekennzeichnet, dass** als Kunststoff für die dem Behälter zugewandte Verbundlage (2) Polyethylen, Polypropylen, Polyester, Polystyrole, deren Copolymere sowie Mischungen daraus ausgewählt wird.

5. Verfahren nach Anspruch 4, **dadurch gekennzeichnet, dass** dem Kunststoff für die dem Behälter zugewandten Verbundlage (2) Füllstoffe zugesetzt werden.

6. Verfahren nach Anspruch 5, **dadurch gekennzeichnet, dass** als Füllstoffe Talkum und/oder Kieselsäure und/oder Kreide eingesetzt werden.

7. Verfahren nach einem der Ansprüche 1 bis 6, **dadurch gekennzeichnet, dass** eine Kunststoff-Verbundlage (2) eingesetzt wird, die gegen den Behälterrand (17') siegelt.

8. Verfahren nach einem der Ansprüche 1 bis 6, **dadurch gekennzeichnet, dass** die Kunststoff-Verbundlage (2) mit einer heisssiegelbaren Schicht (7) versehen ist.

9. Verfahren nach einem der Ansprüche 1 bis 8, **dadurch gekennzeichnet, dass** für die vom Behälter abgewandte Verbundlage (3) Aluminium und/oder Kunststoff ggf. in Kombination mit Papier eingesetzt wird.

10. Verfahren nach einem der Ansprüche 1 bis 9, **dadurch gekennzeichnet, dass** zwischen den Verbundlagen (2, 3) ein Haftvermittler vorgesehen ist.

## Claims

1. Process for producing a cover (1) with opening aid (18) for closing containers (17) based on an at least two-layered composite comprising composite layers of continuous structure, wherein the composite layer (2) facing the container seals against the container edge (17') so that when the composite layers (2, 3) separate, an opening (19) for removal of the packing material located in the container is formed and wherein the composite layer (2) is composed predominantly of a plastic, the inner tearing strength of which in the region of the removal opening (4, 19), without weakening lines being provided for the removal opening, is lower than its composite adhesion to the composite layer (3) remote from the container in the remaining cover region, and the composite adhesion of which to the container edge (17'), at least in the region of the opening aid (18), is greater than that to the composite layer (3), **characterised in that** the composite layers (2, 3) are subjected by means of sealing tools to an elevated pressure and elevated temperature in a region (4) corresponding to the removal opening, so that in this region (4) the composite adhesion between the composite layers (2, 3) increases compared to the remaining cover cross-section.

2. Process according to claim 1, **characterised in that** rollers (8, 10) with raised areas (8', 10') on their surface are used as sealing tools, wherein the surface raised areas correspond to the region of increased composite adhesion (4).

3. Process according to claim 1 or 2, **characterised in that** a composite adhesion in a range of 0.1 to 5 N/15 mm, preferably 0.2 to 0.4 N/15 mm is present outside the removal opening (4, 19).

4. Process according to one of claims 1 to 3, **characterised in that** polyethylene, polypropylene, polyester, polystyrenes, copolymers and also mixtures thereof, are selected as plastic for the composite layer (2) facing the container.

5. Process according to claim 4, **characterised in that** fillers are added to the plastic for the composite layer (2) facing the container.

6. Process according to claim 5, **characterised in that** talcum and/or silicic acid and/or chalk are used as fillers.

7. Process according to one of claims 1 to 6, **characterised in that** a plastic composite layer (2) is used, which seals against the container edge (17').

8. Process according to one of claims 1 to 6, **characterised in that** the plastic composite layer (2) is provided with a heat-sealable layer (7).

9. Process according to one of claims 1 to 8, **characterised in that** aluminium and/or plastic, possibly in combination with paper, is used for the composite layer (3) remote from the container.

10. Process according to one of claims 1 to 9, **characterised in that** an adhesion promoter is provided between the composite layers (2, 3).

## Revendications

1. Procédé de fabrication d'un couvercle (1) comprenant une aide à l'ouverture (18), destiné à la fermeture de récipients (17) sur la base d'un composite au moins à deux couches, constitué de couches de composite continues au niveau de leur structure, la couche de composite (2) orientée vers le récipient scellant contre le bord de récipient (17'), de sorte que lors de la séparation des couches de composite (2, 3) une ouverture (19) se forme pour le prélèvement du produit emballé se trouvant dans le récipient, et la couche de composite (2) se composant principalement d'une matière plastique dont la résistance à la déchirure intérieure dans la zone de l'ouverture de prélèvement (4, 19), sans qu'il soit prévu de lignes d'affaiblissement pour l'ouverture de prélèvement, est inférieure à son adhérence de composite à la couche de composite (3) opposée au récipient dans le reste de la zone de couvercle, et dont l'adhérence de composite au bord de récipient (17') au moins dans la zone de l'aide à l'ouverture (18) est supérieure à celle à la couche de composite (3), **caractérisé en ce que** les couches de composite (2, 3), dans une zone (4) correspondant à l'ouverture de prélèvement, sont exposées au moyen d'outils de scellage à une pression et à une température accrues, de sorte que dans cette zone (4) l'adhérence de composite entre les couches de composite (2, 3) augmente comparativement au reste de la section transversale de couvercle.

2. Procédé selon la revendication 1, **caractérisé en ce que** des cylindres (8, 10) comportant des renflements de surface (8', 10') sont utilisés comme outils de scellage, les renflements de surface correspondant à la zone où l'adhérence de composite (4) est accrue.

3. Procédé selon la revendication 1 ou 2, **caractérisé en ce qu'**à l'extérieur de l'ouverture de prélèvement (4, 19) il existe une adhérence de composite dans une plage de 0,1 à 5 N/15 mm, de préférence 0,2 à 0,4 N/15 mm.

4. Procédé selon l'une quelconque des revendications 1 à 3, **caractérisé en ce que** du polyéthylène, du polypropylène, du polyester, des polystyrènes, leurs copolymères ainsi que des mélanges de ceux-ci sont choisis comme matière plastique pour la couche de composite (2) orientée vers le couvercle.

5. Procédé selon la revendication 4, **caractérisé en ce que** des matières de remplissage sont ajoutées à la matière plastique pour la couche de composite (2) orientée vers le récipient.

6. Procédé selon la revendication 5, **caractérisé en ce que** du talc et/ou de l'acide silicique et/ou de la craie sont utilisés comme matières de remplissage.

7. Procédé selon l'une quelconque des revendications 1 à 6, **caractérisé en ce qu'**il est utilisé une couche de composite (2) en matière plastique, laquelle scelle contre le bord de récipient (17').

8. Procédé selon l'une quelconque des revendications 1 à 6, **caractérisé en ce** la couche de composite (2) en matière plastique est pourvue d'une couche thermoscellable (7).

9. Procédé selon l'une quelconque des revendications 1 à 8, **caractérisé en ce que** pour la couche de composite (3) opposée au récipient on utilise de l'aluminium et/ou de la matière plastique, le cas échéant, en combinaison avec du papier.

10. Procédé selon l'une quelconque des revendications 1 à 9, **caractérisé en ce qu'**il est prévu un agent adhésif entre les couches de composite (2, 3).
